# EUROPEAN PATENT SPECIFICATION

(11) **EP 0 823 396 B1**
(45) Date of publication and mention of the grant of the patent: **27.03.2002**
(21) Application number: 97118872.7
(22) Date of filing: 01.12.1993
(51) Int. Cl.: B66F 11/04, F16M 11/04, F16M 11/12, F16M 11/42

(54) **Improvements in or relating to counter-balancing load carriers**
Ausgeglichener Lastenträger
Support de charge contre-balancé

(30) Priority: 01.12.1992 GB 9225102; 11.02.1993 GB 9302700
(43) Date of publication of application: 11.02.1998
(62) Divisional of application: 94900957.5
(73) Proprietor: Vitec Group plc, Bury St. Edmunds, Suffolk IP33 3TB (GB)
(72) Inventor: Lindsay, Richard Arthur, Eye, Suffolk IP23 8HW (GB)
(74) Representative: Bayliss, Geoffrey Cyril

(56) References cited:
- DE-A- 2 828 694
- DE-A- 3 334 428
- FR-A- 2 611 826
- GB-A- 2 043 026
- GB-A- 2 163 720
- US-A- 4 775 029
- US-A- 4 943 019

## Description

This invention relates to counter-balanced load carriers and is particularly, although not exclusively, applicable to load carriers for supporting television, video and cinematograph cameras. Such a counter-balanced load carrier is known from FR-A-2 611 826.

Cameras for the above purposes are usually mounted on track or wheel mounted pedestals or on balanced arms. Pedestals are eminently suitable for use in open areas but are disadvantageous when the camera is required to move into a restricted space. Balanced arms such as the balanced arm described and illustrated in our U.K. Patent No. 2163720 enable a camera to be moved into a restricted space where a pedestal would not be able to move but involve a more cumbersome mechanism which is more difficult to transport and to store when not in use.

It is an object of the present invention to provide a counter-balanced load carrier which provides the enhanced access obtained with a balanced arm but which has a more compact form when not in use compared with that available hitherto.

This invention provides a counter-balanced load carrier comprising a multi-stage elongatable arm, a base on which the arm is mounted on one stage thereof for pivotal movement in a vertical plane about a horizontal axis, a support for a payload mounted on another stage of the arm and means to apply a counter-balancing load to the arm at a radius from said axis which varies automatically with extension and retraction of the arm in a fixed ratio with the radius of the payload support about said axis whereby the arm with a payload on the support is counter-balanced throughout its range of extension/contraction.

Preferably the arm is a pivotally mounted on the base by a stage at or adjacent one end of the arm and the payload support is located at the other end of the arm.

It is further preferred that means are provided for controlling movement of the arm acting on a control point at a radius from said axis in a fixed ratio with the radius of the payload support whatever the extension/retraction of the arm whereby movements of the control point is reproduced by the payload in said fixed ratio.

More specifically the control means may include means to constrain the control point to move horizontally for horizontal movement of the payload support, to move vertically for vertical movement of the payload support or freely for any combination of horizontal/vertical movement.

In one particular arrangement according to the invention the control means may comprise a vertically extending guideway in which a guide located at said control point engages and a horizontally extending guideway which constrains movement of said guideway, means being provided for locking the guide at the control point in the vertical guideway and for locking the vertical guideway against movement along the horizontal guideway to control movement of the control point as required. In addition the vertically extending guideway may be supported on a carriage which is constrained to move along said horizontally extending guideway.

In a further arrangement according to the invention drive means may be provided for moving said control point horizontally, vertically or in any combination thereof.

By way of example the control point may be located on a stage of the arm adjacent to the stage on which the arm is mounted for rotation about said horizontal axis.

In any of the above arrangements the means to apply a counter-balancing load to the arm may comprise a weight and/or a force applying device acting vertically on the arm on the same or separate stages.

In one arrangement the arm may be pivotally mounted about said horizontal axis at a stage adjacent an end of the arm and a weight acts on the stage at said one end.

Further a force applying device may act on said end stage of the arm or on another stage of the arm on the other side of the horizontal axis.

Preferably the force applying device and/or weight are adjustable to cater for different payloads on the payload support.

In the case where the arm has a control point constrained to move in a vertically extending guideway, the force applying device may be mounted on the guideway to act on the arm through said control point.

It is further preferred that the elongatable arm is a telescopic arm.

In any of the above arrangements means may be provided for interconnecting the respective stages of the arm whereby each stage moves by the same amount with respect to the adjacent stage or stages as the arm is extending/retracted.

For example a pulley system interlinks the stages to cause the stages to move by the same amounts with respect to each other as the arm is extended/retracted.

In one specific arrangement according to the invention one pulley system is provided for causing the stages to move by the same amounts as the arm is extended and another pulley system is provided for causing the stages to move by the same amounts as the arm is contracted.

In any of the above arrangements means may be provided to maintain the payload support in a fixed attitude with respect to the ground whatever the position the arm is tilted to about said horizontal axis.

For example the payload support may be mounted on the arm to tilt about a horizontal axis with respect to the arm and drive means may be provided extending through the arm operated by tilting the arm about said horizontal axis of the arm mounting to tilt the payload support with respect to the arm to maintain the support in a constant attitude to the ground.

In the case where a pulley system is provided for controlling the extension/retraction of the arm, the drive means for the payload support may be incorporated in the pulley system.

In any of the above arrangements the pivot for the arm may be mounted on a support which is mounted on said base for rotation about a vertical axis for swinging the arm about said axis.

Also in any of the above arrangements the base may be supported on wheels which may be steerable for movement over the floor/ground.

The following is a description of some specific embodiments of the invention, reference being made to the accompanying drawings in which:
Figure 1 is a diagrammatic view showing a camera carrier including a telescopic counter-balanced arm on which the camera is mounted shown in the fully extended position;
Figure 2 is a similar view to Figure 1 showing the telescopic arm fully contracted;
Figure 3 is a diagrammatic view of the arm showing a mechanism for controlling the attitude of a camera support at the arm of the arm with tilting of the arm to maintain the support horizontal;
Figure 4 is a diagrammatic view of the mechanism extending through the arm for controlling the relative extension of the several stages of the arm;
Figure 5 is a similar view to Figure 4 showing a mechanism which controls both extension and attitude of the camera support;
Figure 6 is a diagrammatic view of the camera carrier with a video camera installed and in use by an operator by direct movement of the camera;
Figure 7 illustrates a form of the carrier adapted for "crane" control operator from the mounted end of the arm;
Figure 8 is a further modified version of the carrier adapted for remote control of the camera;
Figure 9 is a similar view to Figure 8 showing a further arrangement according to the invention;
Figure 10 is a detailed view of the area A encircled on Figure 9;
Figure 11 is a further similar view to Figure 8 with the system for tilting the arm highlighted;
Figure 12 is a detailed view of the tilting system shown in Figure 11; and
Figure 13 is a plan view of the pedestal base showing a motor drive for rotation of the arm about a vertical axis.

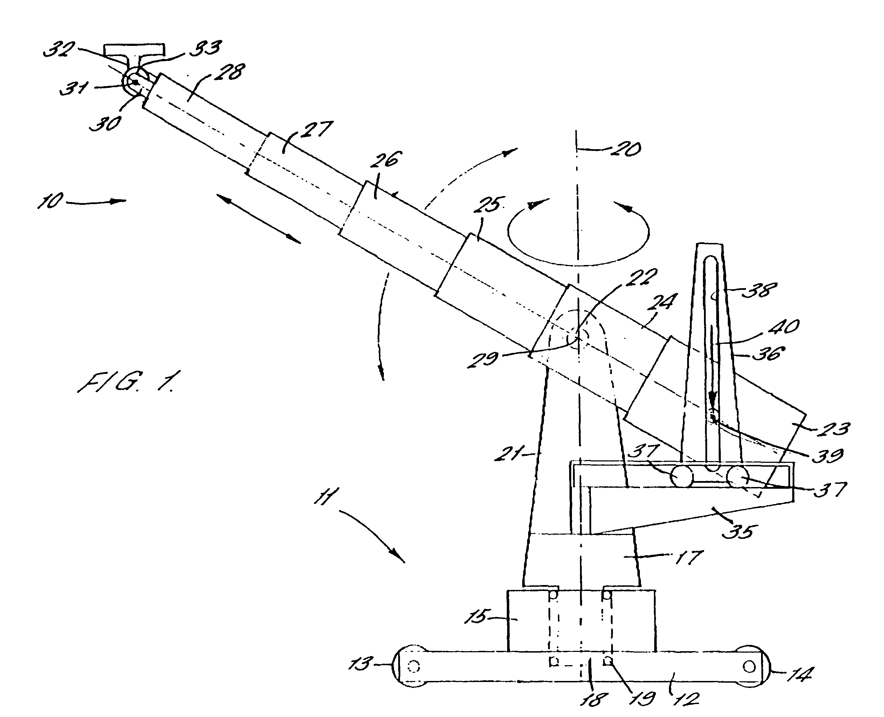

Referring firstly to Figure 1 of the drawings, there is shown a carrier for a television or video camera comprising a counter-balanced telescopic arm indicated generally at 10, mounted on a mobile base indicated generally at 11. The base comprises a platform 12 supported on fore and aft ground wheels 13, 14 to enable the base to be moved over the floor or ground on which it rests, the wheels being steerable through mechanisms not shown.

A hub 15 is mounted on the base on which a carrier 17 for the telescopic arm is mounted by means of a shaft 18 projecting downwardly from the carrier and engaging in bearings 19 supported in the hub for rotation of the carrier 17 about the vertical axis 20 or azimuth. A lock (not shown) is provided for locking the pedastal against rotation when required. Carrier 17 is formed with an upwardly extending bifuricated pedestal the spaced arms 21 of which have inwardly extending trunnions 22 at their upper ends to receive and support the arm for tilting about a horizontal axis as described below.

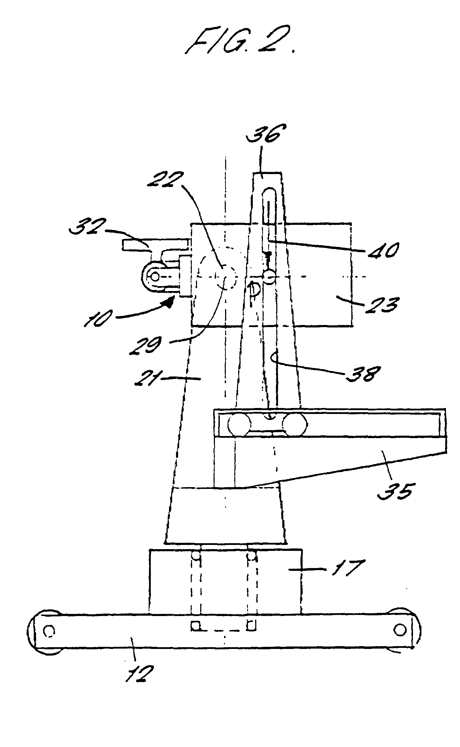

The telescopic arm comprises six elements or stages 23 to 28 which are slidably engaged one within the other to move between the extended position shown in Figure 1 and the retracted position shown in Figure 2. A mechanism which interlinks the successive elements of the arm so that when the arm is extended, all the elements extend by the same amounts with respect to each other and when contracted contract by the same amounts with respect to each other will be described later.

The arm is pivotally mounted on the trunnions 22 at the intermediate element 20 next to end element 23, for rotation of the arm about a horizontal axis 29 defined by the trunnions.

The outer end stage 28 of the arm terminates in a spaced pair of lugs 30 in which a spindle 31 is mounted. A camera support platform 32 is mounted for rotation on the spindle with a drive wheel 33 for controlling the movement of the platform. The platform is provided with a conventional dovetail section slideway or the like to receive a mounting plate of a camera. The platform is maintained horizontal whatever the inclination of the arm through a mechanism to be described later.

The end element 23 of the arm contains a fixed weight (not shown) intended to balance the arm whether telescoped or extended together with the camera platform and a nominal camera load on the platform.

The carrier 17 has a horizontally extending guideway 35 projecting from between the bracket and a carriage 36 has wheels 37 constrained to run in the guideway to support the carriage for horizontal movement along the guideway. The carriage is formed with a vertically extending slot 38 in which a pin 39 on the end stage 23 is constrained to slide so that as the arm tilts about the horizontal axis 29, so the pin will slide up and down the slot 38 and, at the same time the trolley will move along the guideway. A force applying device is mounted on the trolley 36 acting on the pin 39 in a vertically downward direction as indicated by the arrow 40 to apply an additional load to the arm as required to balance the arm. The force applying device is variable so that the load applied to the arm can be adjusted as required to suit the particular camera weight.

The force applying device may be a pneumatic ram with a large pressure chamber in which case the pressure supplied to the ram is adjusted to match the force required. The pneumatic ram could be a tapered pneumatic ram to provide a constant force for any extension of the ram. In an alternative arrangement, the trolley and force applying device could be dispensed with and a series of weights provided to be added to or taken from the end stage to achieve counter-balancing of the arm.

Locking means may be provided for locking the carriage on the guideway and the pin in the slot of the carriage to lock the arm in a fixed position of adjustment if required. Likewise, a locking device may be provided for locking the carrier 17 in a selected rotational position in the hub 15.

The following table shows the effect of locking and unlocking, either alone or in combination, any of the aforementioned locking means.

| Vertical | Horizontal | Azimuth | Effect on load carrying platform |
|---|---|---|---|
| locked | locked | locked | locked in selected position |
| locked | locked | unlocked | peripheral circular motion on horizontal plane |
| locked | unlocked | locked | motion in horizontal line. |
| unlocked | locked | locked | motion in vertical line. |
| locked | unlocked | unlocked | motion on horizontal plane. |
| unlocked | unlocked | locked | motion on vertical plane. |
| unlocked | locked | unlocked | motion on a cylindrical plane. |
| unlocked | unlocked | unlocked | complete freedom of motion. |

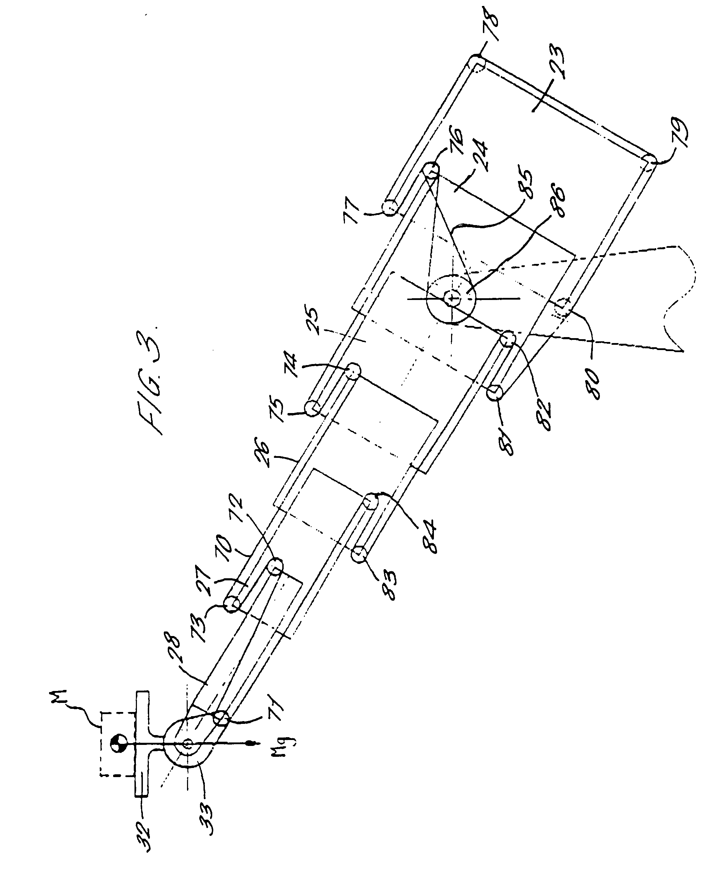

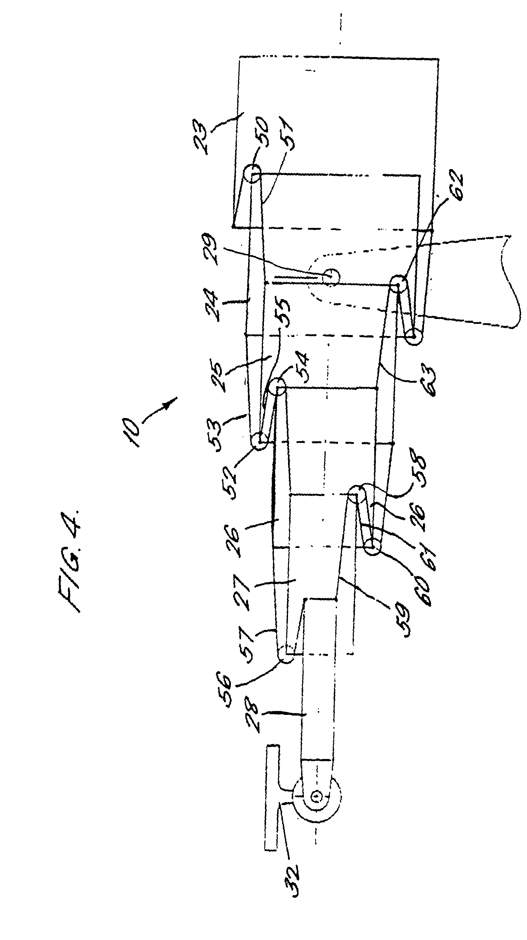

As indicated above, the stages of the ram extend and contract by uniform amounts and the mechanism interconnecting the stages to achieve this will now be described with reference to Figure 4 of the accompanying drawings. Looking at the upper side of the arm, the lower or inner end of intermediate stage 24 carries a rotatable pulley 50 and a wire 51 extends over the pulley 50 and is anchored to the upper or outer end of the stage 23 and the bottom or inner end of stage 25. The upper or outer end of stage 25 is provided with a pulley 52 around which a wire or other form of tether 53 extends from the outer end of stage 24 to the bottom end of stage 26. The bottom end of stage 26 is also provided with a freely rotatable pulley 54 and a wire 55 is connected to the upper end of stage 25 and extends around the pulley 54 to the bottom of stage 27. Finally, the outer end of stage 27 has a freely rotatable pulley 56 and a wire 57 extends from the upper end of stage 26 around the pulley to the bottom end of stage 28. The arrangement continues along the underside of the arm with a pulley 58 at the bottom of stage 27 with a wire 59 extending from the bottom of stage 28 around the pulley to the top of stage 26; a pulley 60 at the top of stage 26 with a wire 61 extending from the bottom of stage 27 to the top of stage 25 and a pulley 62 at the bottom of stage 25 and a wire 63 extending from the bottom of stage 26 around the pulley to the top of stage 23.

The interconnections between the stages provided by the wire/pulley arrangements ensures that as the arm is extended, all stages of the arm move outwardly with respect to each other by the same amounts and, as the stages of the arm are telescoped together, they move together by the same amounts. As a result, the ratio between the radius of the camera platform and axis 29 and the radius of the weight or other load acting on the stage 23 about stages 29 maintains a fixed ratio so that the arm is counter-balanced throughout its range of extension and retraction.

Reference is now made to Figure 3 of the drawings which illustrates the mechanism for maintaining the camera platform 32 horizontal throughout the range of pivotal movement of the telescopic arm abouts its horizontal axis. The system comprises an endless cable or belt transmission 70 extending from a pulley 71 at the outer end of stage 28 of the arm, around a pulley 72 at the bottom of stage 28, around a pulley 73 at the upper end of stage 27, around a pulley 74 at the bottom of stage 26, around a pulley 75 at the top of stage 25, around a pulley 76 at the bottom of stage 24, around a pulley 77 at the top of stage 23, around pulleys 78 and 79 at the bottom of stage 23, around a pulley 80 at the top of stage 23, around a pulley 81 at the top of stage 24, around a pulley 82 at the bottom of stage 25, around a pulley 83 at the top of stage 26, around a pulley 84 at the bottom of stage 27 and thence around the pulley 71. The pulley 76 is coupled side-by-side with a similar pulley which is driven by a twistless endless belt drive 85 encircling a fixed wheel 86 mounted on the spindle supporting the arm for rotation. Thus, as the arm rotates about the spindle, the fixed pulley 86 causes the pulley 76 to rotate driving the endless belt 70 in one or other direction with respect to the arm. As indicated above, the belt 70 drives pulley 71 at the outer end of the outer stage 28 of the arm. A further pulley is mounted side-by-side with pulley 71 having an endless belt drive 72 to the wheel 33 to which the camera platform is fixed. Thus, when the belt drives the pulley 71 as a result of pivoting of the arm about the axis 29, the camera platform is also rotated with respect to the arm and the various ratios of the drives are set so that the platform is maintained in its horizontal attitude as illustrated in Figure 3 throughout the tilting of the arm.

Other possible arrangements for maintaining the platform horizontal include:
(i) telescopic torque shaft;
(ii) gimballed camera mounting;
(iii) servo motor control of load orientation with rotational sensor at axis 29;
(iv) force applied through flexible cable;
(v) a hydraulic drive;
(vi) a servo motor drive.

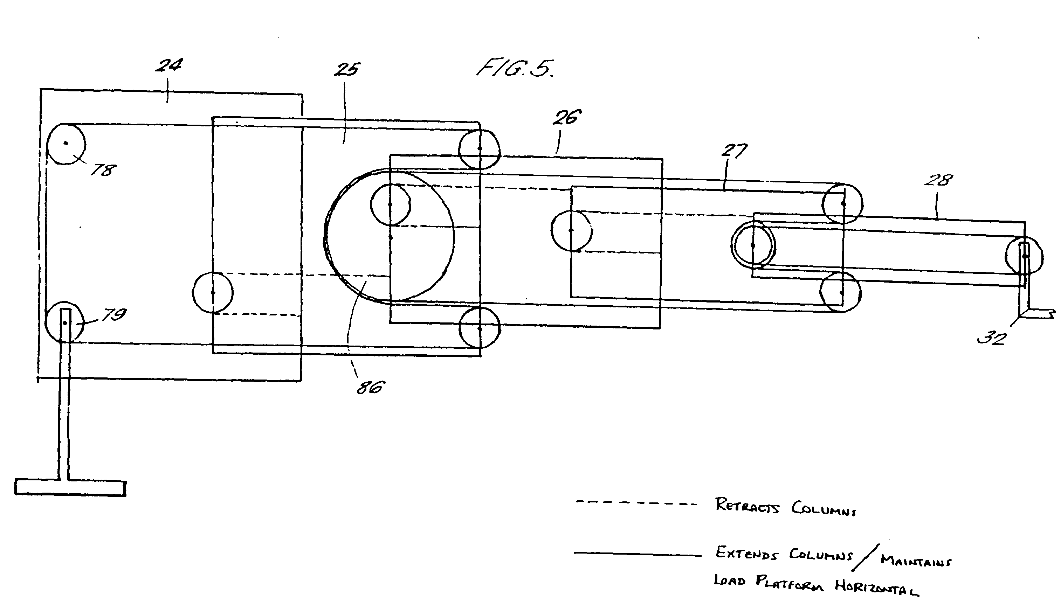

A further arrangement is illustrated in Fig. 5 in which the system for controlling the extension of the arm is combined with the endless belt system for maintaining the camera support horizontal.

Other possible arrangements for extending/retracting the telescopic arm include:
i) hydraulic drive
ii) servo motors

Manual positional control of the load carrying platform is preferably performed directly at the load carrying platform but remote positional control of the load carrying platform is preferably performed at the control pivot points of the arm and may, as the balanced arm is fully balanced, be controlled by three small electric motors, or the like; one for vertical, one for horizontal and one in azimuth; remotely controlled via signal lines. Control by this method has the added advantage that the movement of the load is proportional to the control point displacewment provided by the motors.

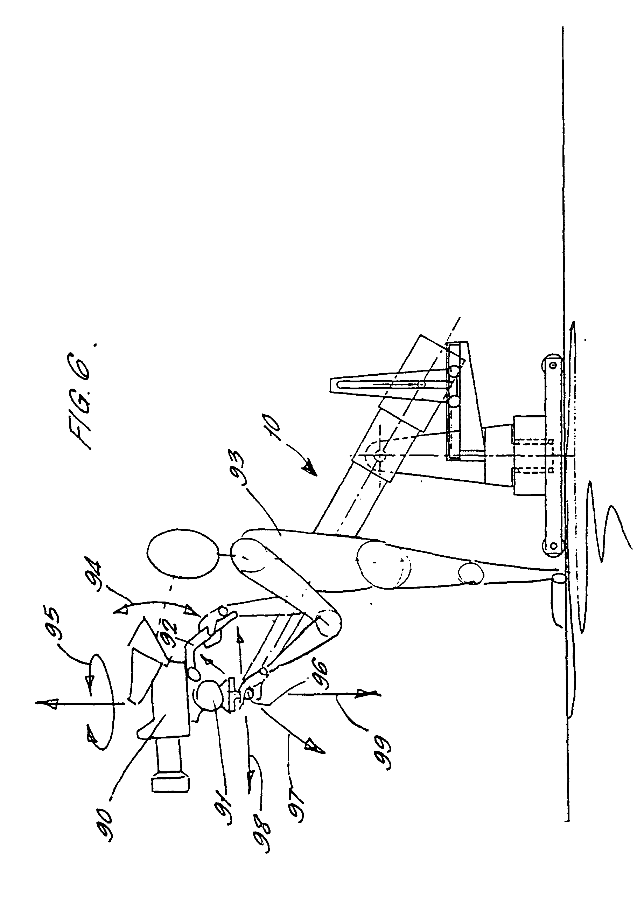

Figure 6 of the drawings illustrates the carrier in use supporting a T.V. camera 90 mounted on the platform 32 by means of a pan/tilt head indicated at 91. The camera has a hand control bar 92 for an operator illustrated diagrammatically at 93, for moving the camera in tilt and pan as indicated by the arrows 94 and 95. The upper end of the arm 10 has a cross bar 96 for the operator to move the camera laterally as indicated by the arrows 97 fore and aft as indicated by the arrows 98 and up and down as indicated by the arrows 99 as provided by the telescopic arm and its mounting with the movement of the camera being counter-balanced throughout.

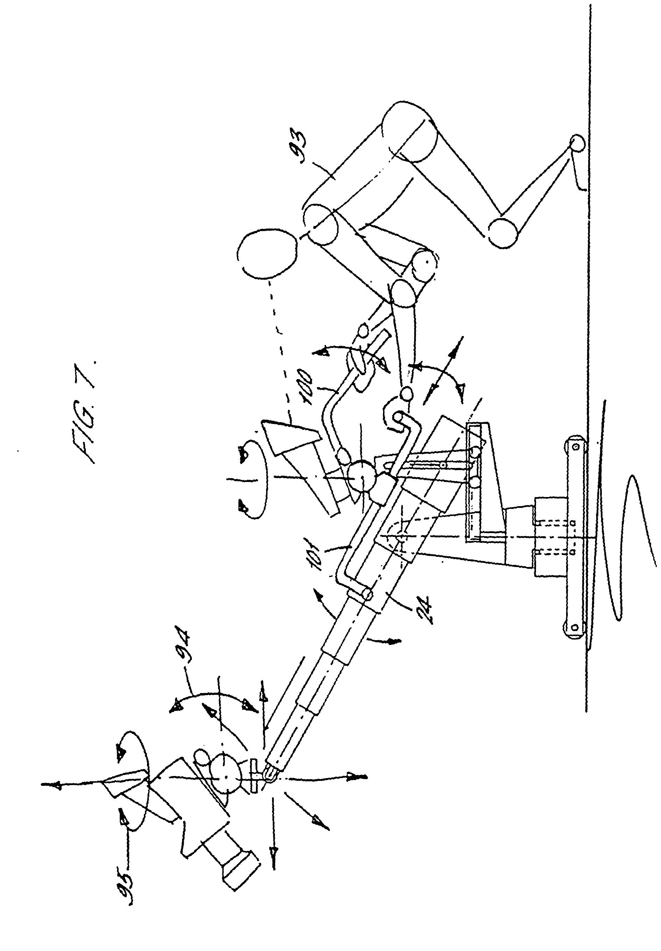

Figure 7 of the drawings shows a variation on the arrangement in Figure 5 in which the camera mounting is provided with servo motors for the pan and tilt movements 94, 95 with a controller 100 at the lower end of the arm for the operator to effect pan and tilt movement of the camera. Lateral, fore and aft and up and down movement of the camera is effected through a control arm 101 and connected to an intermediate stage 24 of the arm for effecting tilt rotation and extension/retraction of the arm.

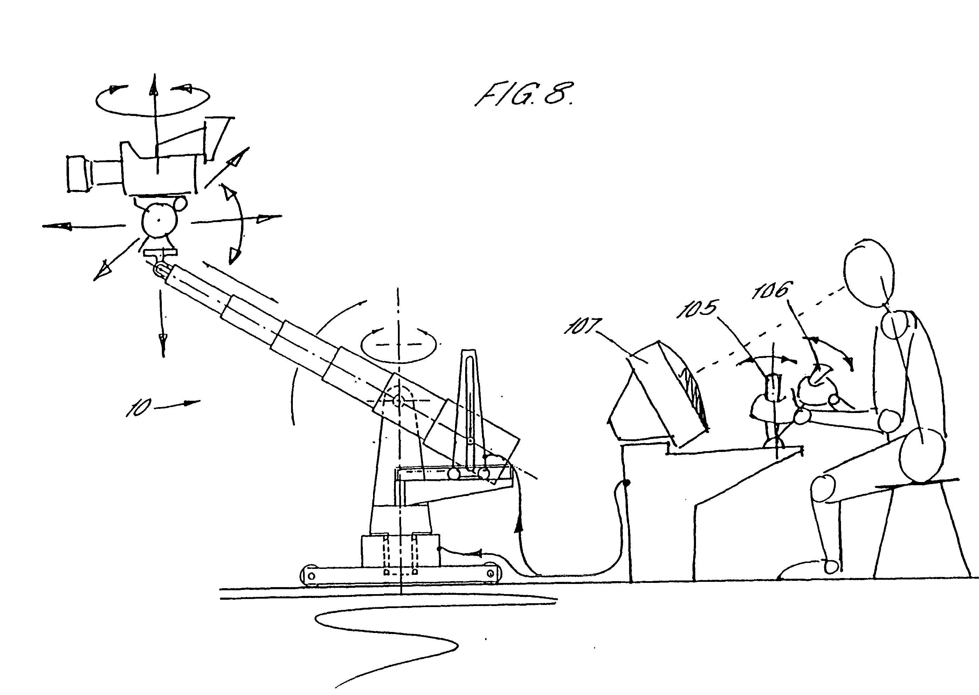

Figure 8 of the drawings shows a further modification in which servo motors are also provided for extending/retracting the arm rotating the carrier 17 about the platform and tilting the arm about the carrier operable from a remote control camera position by means of joy sticks indicated at 105 and 106 with a remote monitor 107 for the camera operator to review the picture seen by the camera.

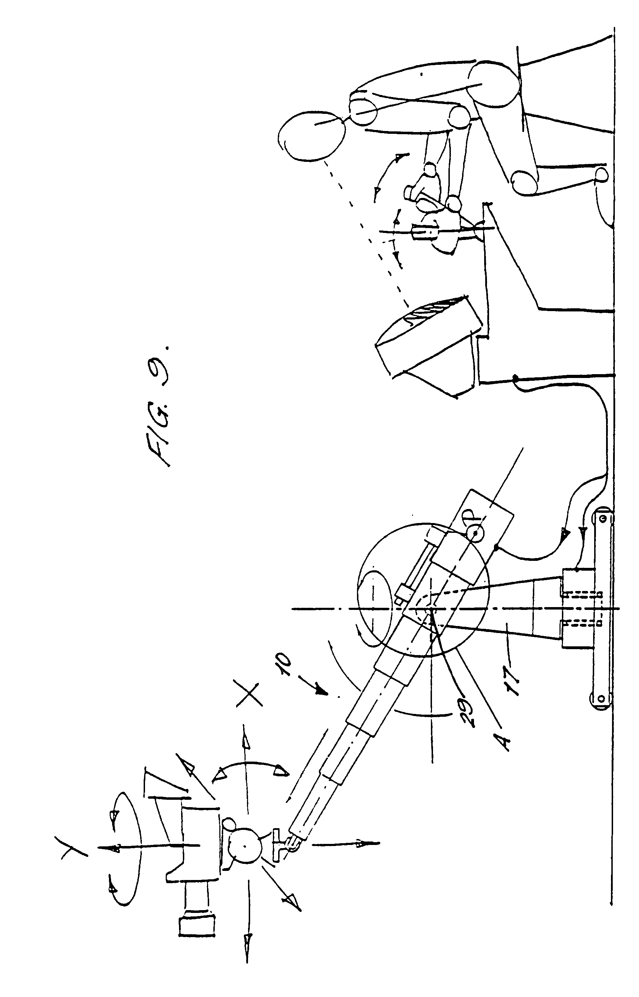

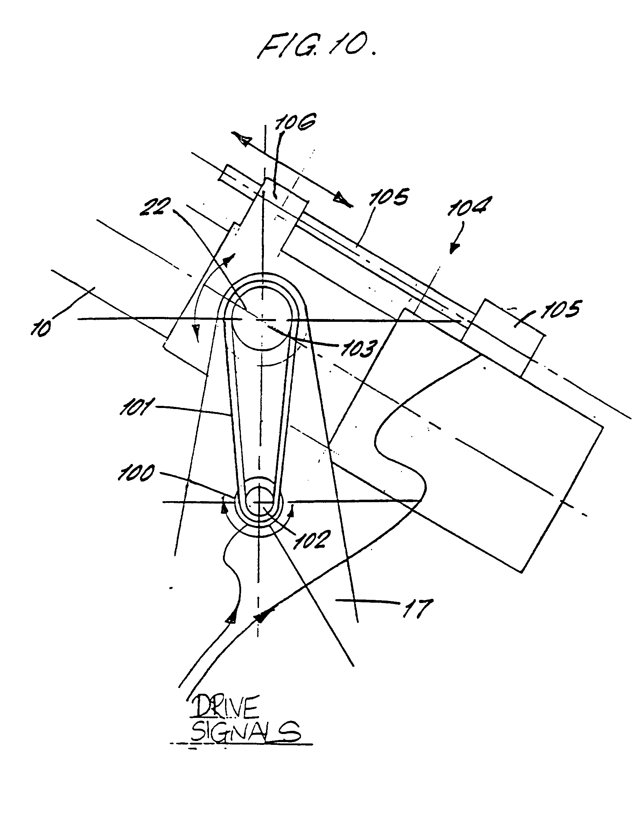

Referring to Figures 9 and 10 of the drawings, a drive for tilting the extendable arm 10 about its horizontal axis 29 is illustrated comprising a motor 100 mounted within the column 17 of the pedestal below the arm and having a chain/belt drive 101 extending around sprockets/pullies 102, 103 secured to the motor and to the shaft 22 on which the arm is mounted. The motor is controlled from the remote control camera position illustrated in rotation of the arm as directed by the operator.

A further feature of the construction is the use of a linear actuator for positively extending and retracting the arm. The linear actuator drive unit 104 is mounted on the lowermost section of the arm and the drive element 105 of the actuator extends parallel to the arm to engage in a fixture 106 on the adjacent element of the arm. The arm contains the cable/belt mechanism described above with reference to Figures 1 to 5 of the drawings for transmitting movement between the respective sections of the arm so that the sections move in unison by the same amount with respect to each other as the arm is extended and retracted. Thus movement of the lowermost section of the arm with respect to the adjacent section by the linear actuator by a precise predetermined amount under the control of the camera operator will move all of the sections of the arm with respect to each other by the same amount to provide a movement at the camera support end of the arm which is the sum of the movements of the respective sections with respect to each other.

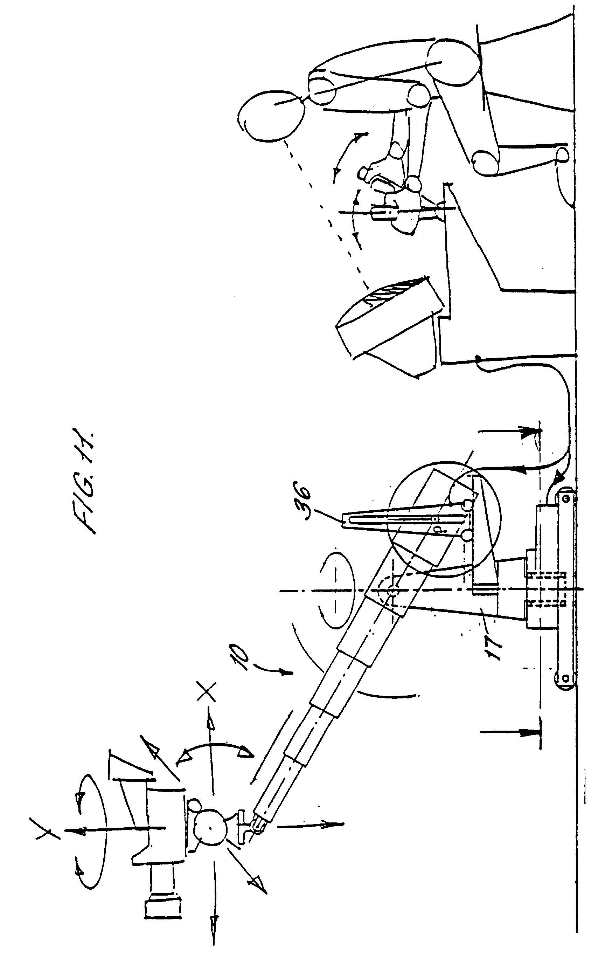

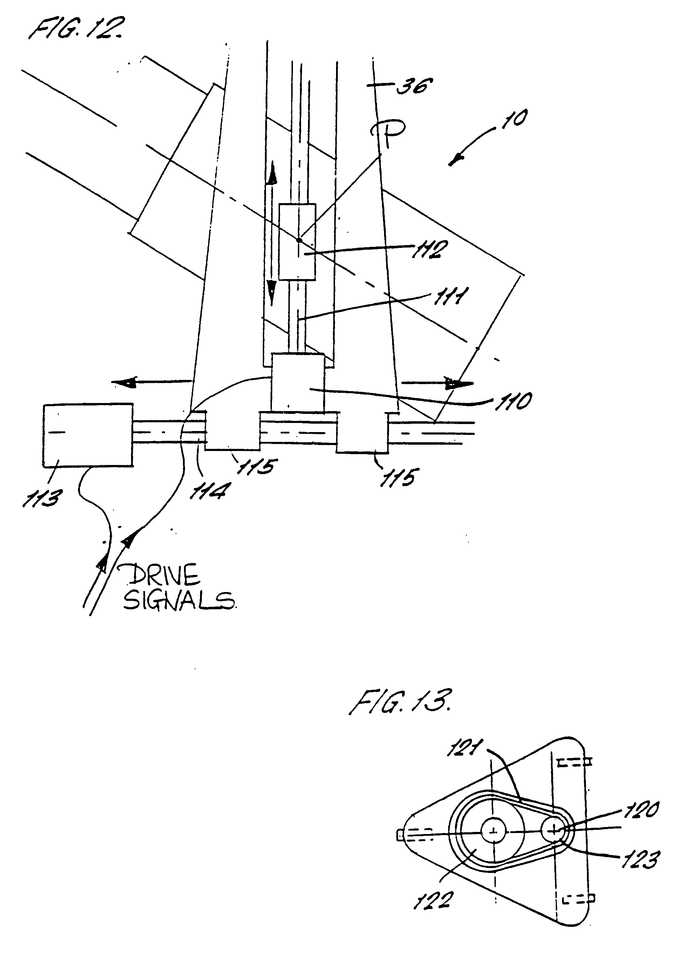

Referring now to Figure 12 of the drawings, a motorised arrangement for the vertical/horizontal movements provided by the carriage 36 is shown. A vertically extending linear actuator is mounted on the carriage having a motor unit 110 with an elongate drive element 111 engaging in a fixture 112 secured to the arm at control point P. A horizontally extending linear actuator is mounted on the column comprising a motor unit 113 and an elongate drive element 114 engaging in fixtures 115 on the carriage horizontally. Thus the position of the control point can be adjusted to control the X/Y position of the camera platform from the remote control position.

In addition, a further drive motor is provided for rotating the column of the pedestal about its vertical axis on the base controlled from the remote control station for the camera. Referring to Figure 13 a motor unit 120 is mounted on the base of the pedestal with a chain/belt drive 121 extending around sprockets/pulleys 122, 123 on the motor shaft and column end for rotating the column. Thus the whole of the movements of the camera and pedestal can be governed from the remote control station by the camera operator.

It will be appreciated that the invention is not confined to the above described embodiments and many modifications may be made thereto without departing from the scope of the invention. For example the arrangements for providing horizontal/vertical movement of the end stage of the arm comprising the horizontal guideway 35 and carriage 36 with its vertical guideway may be replaced by other guidance arrangements such as templates defining prescribed movements and cams on the arm to follow the templates.

## Claims

1. A counter-balanced load carrier comprising a multi-stage elongatable arm (10), a base on which the arm is mounted on one stage (24) thereof for pivotal movement in a vertical plane about a horizontal axis (29), a support (32) for a payload mounted on another stage (28) of the arm and means (23) to apply a counter-balancing load to the arm at a radius from said axis which varies automatically with extension and retraction of the arm in a fixed ratio with the radius of the payload support about said axis whereby the arm with a payload on the support is counter-balanced throughout its range of extension/retraction, **characterised in that** the payload support is mounted on the arm to tilt about a horizontal axis with respect to the arm and drive means (76 to 86) are provided extending through the arm operated by tilting the arm about said horizontal axis (29) to tilt the payload support (32) with respect to the arm to maintain the support at a constant attitude with respect to the ground throughout the range of tilt of the arm.

2. A counter-balanced load carrier as claimed in claim 1, **characterised in that** the arm (10) is pivotally mounted on the base by a stage (27) at or adjacent one end of the arm and the payload support (32) is located at the other end of the arm.

3. A counter-balanced load carrier as claimed in claim 1 or claim 2, **characterised in that** the elongatable arm (10) is a telescopic arm.

4. A counter-balanced load carrier as claimed in any of the preceding claims, **characterised in that** means (76 to 80) are provided for interconnecting the respective stages (23 to 28) of the arm (10) whereby each stage moves by the same amount with respect to the adjacent stage or stages as the arm is extending/retracted.

5. A counter-balanced load carrier as claimed in claim 4, **characterised in that** a pulley system (76 to 80) interlinks the stages to cause the stages to move by the same amounts with respect to each other as the arm is extended/retracted.

6. A counter-balanced load carrier as claimed in claim 5, **characterised in that** one pulley system is provided for causing the stages to move by the same amounts as the arm is extended and another pulley system is provided for causing the stages to move by the same amounts as the arm is counteracted.

7. A counter-balanced load carrier as claimed in claim 5 or claim 6, and in the case where a payload support (32) is tilted with respect to the arm by drive means extending through the arm, **characterised in that** the pulley system (76 to 80) which effects extension/retraction of the arm also provides said drive means for the payload support.

8. A counter-balanced load carrier as claimed in any one of claims 1 to 7, **characterised in that** hydraulically operated means are provided between the respective stages (23 to 28) of the arm for controlling extension/retraction of the arm.

9. A counter-balanced load carrier as claimed in any of the preceding claims **characterised in that** the pivot (22) for the arm (10) is mounted on a support (17, 21) which is mounted on said base (11) for rotation about a vertical axis (20) for swinging the arm about said axis.

10. A counter-balanced load carrier as claimed in any of the preceding claims, **characterised in that** the base (11) is supported on wheels (13, 14) for movement of the base over the floor/ground.

11. A counter-balanced load carrier as claimed in any of the preceding claims, **characterised in that** power operated means are provided for extending/retracting the arm (10) and tilting the arm about said horizontal axis (29) and a remote control unit (105, 106) is provided for controlling the power means.

12. A counter-balanced load carrier as claimed in claim 11, **characterised in that** the power means comprise a first power unit acting between adjacent stages (23 to 28) of the arm for extending/retracting the arm (10) and a second power unit acting on the arm to rotate the arm about said horizontal axis.

13. A counter-balanced load carrier as claimed in claim 12, **characterised in that** the arm has a control point (39) at a radius from the horizontal axis (29) of the arm in a fixed ratio with the radius of the payload support whatever the extension/retraction of arm whereby movement of the control point is reproduced by the payload in said fixed ratio and said power means act on the arm at said control point for causing the arm to extend/retract and tilt.

14. A counter-balanced load carrier as claimed in claim 13, **characterised in that** the power means acting on the control point of the arm comprises two power units for moving the control point in orthoganol directions to effect extension/retraction and tilting of the arm.

15. A counter-balanced load carrier as claimed in claim 14, **characterised in that** one of the power units acts in a vertical direction on the control point and the other power unit acts in a horizontal direction of the control point.

16. A counter-balanced load carrier as claimed in any of claims 11 to 15, **characterised in that** a further power unit is provided for rotating the arm about a vertical axis extending through the horizontal axis about which the arm tilts, the further power unit also being under the control of said control units.

17. A counter-balanced counter-balanced load carrier as claimed in any one of the claims 1 to 16, **characterised in that** the payload support on the arm is adapted to receive a T.V., video or cinematographic camera mounted on the support for pan and tilt movement.

18. A counter-balanced load carrier as claimed in claim 17, **characterised in that** servo-motors are provided for moving the camera with respect to the support in pan and tilt directions with respect to the support and control means are provided for effecting said pan and tilt movement of the camera.

19. A counter-balanced load carrier as claimed in claim 17 or claim 18, **characterised in that** the control means for the servo-motors are located adjacent the end of the arm remote from the payload support.

20. A counter-balanced load carrier as claimed in claim 19, **characterised in that** the control means comprise a universally mounted control (100) arm rotation of which about a vertical axis causes pan movement of the camera and rotation about the horizontal axis causes tilt movement of the camera through said servo-motors.

21. A counter-balanced load carrier as claimed in claim 20, **characterised in that** a viewfinder is mounted on the control arm and is remotely coupled to the camera to replicate the field of view of the camera at the control member.

## Patentansprüche

1. Ausbalancierter Lasteniräger mit einem mehrstufig verlängerbaren Arm (10), einer Basis, an welcher der Arm an seiner einen Stufe (24) für eine Schwenkbewegung in der vertikalen Ebene um eine horizontale Achse (29) schwenkbar befestigt ist, einem Halter (32) für eine Nutzlast, der an einer anderen Stufe (28) des Arms befestigt ist, und Mittel (23) zum Beaufschlagen des Arms mit einem Gegengewicht in einem Radius zu der Achse, der automatisch mit dem Ausdehnen und Einziehen des Arms in einem feststehenden Verhältnis zum Radius des Nutzlasthallers um diese Achse variiert, wodurch der Arm mit der Nutzlast auf dem Halter über den ganzen Ausdehnungs/Einzugsbereich ausbalanciert ist,
**dadurch gekennzeichnet, daß** der Nutzlasthalter so an dem Arm befestigt ist, daß er um eine horizontale Achse mit Bezug auf den Arm kippen kann, und daß Antricbsmittel (76 bis 86) vorgesehen sind, die sich durch den Arm erstrecken, welche durch Kippen des Armes um besagte horizontale Achse (29) betätigt werden, um den Nutzlasthalter (32) bezogen auf den Arm über den ganzen Kippbereich des Armes in einer bezogen auf den Boden konstanten Haltung zu halten.

2. Ausbalancierter Lastenträger nach Anspruch 1,
**dadurch gekennzeichnet, daß** der Arm (10) an der Basis mittels einer Stufe (27) am einen Ende oder in der Nähe des einen Endes des Armes schwenkbar befestigt ist, und daß der Nutzlastträger (32) am anderen Ende des Armes gelegen ist.

3. Ausbalancierter Lastenträger nach Anspruch 1 oder 2,
**dadurch gekennzeichnet, daß** der verlängerbare Arm (10) ein Teleskoparm ist.

4. Ausbalancierbarer Lastenträger nach einem der vorstehenden Ansprüche,
**dadurch gekennzeichnet, daß** die Mittel (76 bis 80) für das Verbinden der jeweiligen Stufen (23 bis 28) des Arms (10) vorgesehen sind, wodurch jede Stufe mit Bezug auf die benachbarte Stufe oder die benachbarten Stufen um das gleiche Maß bewegt wird, wenn der Arm ausgezogen/eingezogen wird.

5. Ausbalancierter Lastenträger nach Anspruch 4,
**dadurch gekennzeichnet, daß** die Stufen durch ein Riemenscheibensystem (76 bis 80) verbunden sind, um zu bewirken, daß die Stufen bezogen aufeinander sich um das gleiche Maß bewegen, wenn der Arm ausgezogen/eingezogen wird.

6. Ausbalancierter Lastenträger nach Anspruch 5,
**dadurch gekennzeichnet, daß** ein Riemenscheibensystem vorgesehen ist, um zu bewirken, daß die Stufen sich um das gleiche Maß bewegen, wenn der Arm ausgezogen wird, und ein weiteres Riemenscheibensystem vorgesehen ist, um zu bewirken, daß sich die Stufen um das gleiche Maß bewegen, wenn der Arm entgegengesetzt betätigt wird.

7. Ausbalancierter Lastenträger nach Anspruch 5 oder 6,
und für den Fall, daß ein Nutzlastträger (32) bezogen auf den Arm mittels Antriebsmitteln gekippt wird, die sich durch den Arm erstrecken,
**dadurch gekennzeichnet, daß** das Riemenscheibensystem (76 bis 80), welches das Ausziehen/Einziehen des Armes bewirkt, auch die Antriebsmiltel für den Nutzlastträger bildet.

8. Ausbalancierter Lastenträger nach einem der Ansprüche 1 bis 7,
**dadurch gekennzeichnet, daß** zwischen den jeweiligen Stufen (23 bis 28) des Armes hydraulisch betätigte Mittel vorgesehen sind, um das Ausziehen/Einziehen des Arms zu steuern.

9. Ausbalancierter Lastenträger nach einem der vorstehenden Ansprüche,
**dadurch gekennzeichnet, daß** das Gelenk (22) für den Arm (10) an einem Halter (17, 21) befestigt ist, der auf der Basis (11) für eine Rotation um eine vertikale Achse (20) befestigt ist, um den Arm um diese Achse schwenken zu können.

10. Ausbalancierter Lastenträger nach einem der vorstehenden Ansprüche,
**dadurch gekennzeichnet, daß** die Basis (11) auf Rädern (13,14) zum Bewegen der Basis über den Boden/Untergrund gehalten ist.

11. Ausbalancierter Lastenträger nach einem der vorstehenden Ansprüche,
**dadurch gekennzeichnet, daß** für das Ausziehen/Einziehen des Arms (10) und das Schwenken des Arms um die besagte horizontale Achse (29) antriebsbetätigte Mittel vorgesehen sind, und daß eine Fernsteuerungseinheit (105, 106) vorgesehen ist, um die Antriebsmittel zu steuern.

12. Ausbalancierter Lastenträger nach Anspruch 11,
**dadurch gekennzeichnet, daß** die Antriebsmittel eine erste Antriebseinheit, die zwischen benachbarten Stufen (23 bis 28) des Armes zum Ausziehen/Einziehen des Armes (10) wirkt und eine zweite Antriebseinheit aufweisen, die auf den Arm wirkt, um den Arm um die Horizontalachse zu drehen.

13. Ausbalancierter Lastenträger nach Anspruch 12,
**dadurch gekennzeichnet, daß** der Arm einen Steuerpunkt (39) in einem Radius zur Horizontalachse (29) des Arms mit einem feststehenden Verhältnis zum Radius des Nutz-lasthalters hat, ungeachtet des Ausziehens/Einziehens des Armes, wodurch die Bewegung des Steuerpunktes durch die Nutzlast in dem feststehenden Verhältnis reproduziert wird, und die Antriebsmittel auf den Arm an diesem Steuerpunkt wirken, um zu bewirken, daß der Arm ausgezogen/eingezogen und geschwenkt wird.

14. Ausbalancierter Lastenträger nach Anspruch 13,
**dadurch gekennzeichhet, daß** die Antriebsmittel, welche auf den Steuerpunkt des Armes wirken, zwei Antriebseinheiten zum Bewegen des Steuerpunktes in zueinander rechtwinkeligen Richtungen aufweisen, um das Ausziehen/Einziehen und Kippen des Armes zu bewirken.

15. Ausbalancierter Lastenträger nach Anspruch 14,
**dadurch gekennzeichnet, daß** eine der Antriebseinheiten auf den Steuerungspunkt in einer vertikalen Richtung wirkt, und die andere Antriebseinheit auf den Steuerpunkt in einer horizontalen Richtung wirkt.

16. Ausbalancierter Lastenträger nach einem der Ansprüche 11 bis 15,
**dadurch gekennzeichnet, daß** eine weitere Antriebseinheit vorgesehen ist, um den Arm um eine vertikale Achse zu drehen, die sich durch die horizontale Achse, um welche der Arm kippt, erstreckt, wobei die weitere Antriebseinheit ebenfalls durch die Steuerungseinheiten gesteuert wird.

17. Ausbalancierter Lastenträger nach einem der Ansprüche 1 bis 16,
**dadurch gekennzeichnet, daß** der Nutzlastträger an dem Arm so ausgebildet ist, daß er eine TV, Video- oder Filmkamera aufnehmen kann, die auf dem Halter für eine Schwenk- und Kippbewegung montiert ist.

18. Ausbalancierter Lastenträger nach Anspruch 17,
**dadurch gekennzeichnet, daß** für das Bewegen der Kamera mit Bezug auf den Halter in Schwenk- und Kipprichtungen mit Bezug auf den Halter Servomotoren vorgesehen sind, und Steuerungsmittel vorgesehen sind, um die Schwenk- und Kippbewegung der Kamera zu bewirken.

19. Ausbalancierter Lastenträger nach Anspruch 17 oder Anspruch 18,
**dadurch gekennzeichnet, daß** die Steuerungsmittel für die Servomotoren in der Nähe desjenigen Endes des Armes, welches dem Nutzlastträger gegenüberliegt, angeordnet sind.

20. Ausbalancierter Lastenträger nach Anspruch 19,
**dadurch gekennzeichnet, daß** die Steuerungsmittel eine universell montierte Steuerung (100) aufweisen, deren Armrotation um eine vertikale Achse eine Schwenkbewegung der Kamera und deren Rotation um die horizontale Achse eine Kippbewegung der Kamera durch diese Servomotoren verursacht.

21. Ausbalancierter Lastenträger nach Anspruch 20,
**dadurch gekennzeichnet, daß** am Steuerungsarm ein Sucher befestigt ist, und durch Fernsteuerung an die Kamera gekoppelt ist, um das Bildfeld der Kamera am Steuerungselement wiederzugeben.

## Revendications

1. Porte-charge équilibré par contrepoids comportant un bras extensible (10) à étages multiples, une embase sur un étage (24) de laquelle le bras est monté pour effectuer un mouvement de pivotement dans un plan vertical autour d'un axe horizontal (29), un support (32) pour une charge utile monté sur un autre étage (28) du bras et un moyen (23) destiné à appliquer une charge d'équilibrage au bras à un rayon dudit axe qui varie automatiquement avec l'extension et le retrait du bras dans une proportion fixe avec le rayon du support de la charge utile autour dudit axe grâce à quoi le bras, avec une charge utile sur le support, est équilibré par contrepoids sur toute sa plage d'extension/retrait, **caractérisé en ce que** le support de charge utile est monté sur le bras de façon à s'incliner autour d'un axe horizontal par rapport au bras et des moyens d'entraînement (76 à 86) sont prévus, s'étendant à travers le bras et actionnés par l'inclinaison du bras autour dudit axe horizontal (29) pour incliner le support (32) de la charge utile par rapport au bras afin de maintenir le support dans une assiette constante par rapport au sol sur toute la plage d'inclinaison du bras.

2. Porte-charge équilibré par contrepoids selon la revendication 1, **caractérisé en ce que** le bras (10) est monté de façon pivotante sur l'embase par un étage (27) à, ou adjacent à, une extrémité du bras et le support (32) de charge utile est placé à l'autre extrémité du bras.

3. Porte-charge équilibré par contrepoids selon la revendication 1 ou la revendication 2, **caractérisé en ce que** le bras extensible (10) est un bras télescopique.

4. Porte-charge équilibré par contrepoids selon l'une quelconque des revendications précédentes, **caractérisé en ce que** des moyens (76 à 80) sont prévus pour relier entre eux les étages respectifs (23 à 28) du bras (10) grâce à quoi chaque étage se déplace de la même distance par rapport à l'étage adjacent ou aux étages adjacents lors de l'extension/retrait du bras.

5. Porte-charge équilibré par contrepoids selon la revendication 4, **caractérisé en ce qu'**un système de poulies (76 à 80) relie entre eux les étages pour amener les étages à se déplacer des mêmes distances les uns par rapport aux autres pendant l'extension/retrait du bras.

6. Porte-charge équilibré par contrepoids selon la revendication 5, **caractérisé en ce qu'**un système de poulies est prévu pour amener les étages à se déplacer des mêmes distances pendant l'extension du bras et un autre système de poulies est prévu pour amener les étages à se déplacer de la même distance pendant l'action contraire du bras.

7. Porte-charge équilibré par contrepoids selon la revendication 5 ou la revendication 6, et dans le cas où un support (32) de charge utile est incliné par rapport au bras par des moyens d'entraînement s'étendant à travers le bras, **caractérisé en ce que** le système de poulies (76 à 80) qui réalise l'extension/retrait du bras procure également lesdits moyens d'entraînement pour le support de la charge utile.

8. Porte-charge équilibré par contrepoids selon l'une quelconque des revendications 1 à 7, **caractérisé en ce que** des moyens actionnés hydrauliquement sont prévus entre les étages respectifs (23 à 28) du bras pour commander l'extension/retrait du bras.

9. Porte-charge équilibré par contrepoids selon l'une quelconque des revendications précédentes, **caractérisé en ce que** le pivot (22) pour le bras (10) est monté sur un support (17, 21) qui est monté sur ladite embase (11) afin de tourner autour d'un axe vertical (20) pour faire osciller le bras autour dudit axe.

10. Porte-charge équilibré par contrepoids selon l'une quelconque des revendications précédentes, **caractérisé en ce que** l'embase (11) est supportée sur des roues (13, 14) afin que l'embase se déplace sur le plancher/sol.

11. Porte-charge équilibré par contrepoids selon l'une quelconque des revendications précédentes, **caractérisé en ce que** des moyens actionnés par une force sont prévus pour l'extension/retrait du bras (10) et l'inclinaison du bras autour dudit axe horizontal (29) et une unité de commande à distance (105, 106) est prévue pour commander les moyens d'application de force.

12. Porte-charge équilibré par contrepoids selon la revendication 11, **caractérisé en ce que** les moyens d'application de force comprennent une première unité de force agissant entre des étages adjacents (23 à 28) du bras pour l'extension/retrait du bras (10) et une seconde unité de force agissant sur le bras pour faire tourner le bras autour dudit axe horizontal.

13. Porte-charge équilibré par contrepoids selon la revendication 12, **caractérisé en ce que** le bras comporte un point de commande (39) à un rayon de l'axe horizontal (29) du bras dans une proportion fixe avec le rayon du support de la charge utile quelle que soit l'extension/rétraction du bras, grâce à quoi un mouvement du point de commande est reproduit par la charge utile dans ladite proportion fixe et lesdits moyens d'application de force agissent sur le bras audit point de commande pour provoquer l'extension/retrait et l'inclinaison du bras.

14. Porte-charge équilibré par contrepoids selon la revendication 13, **caractérisé en ce que** les moyens moteurs agissant sur le point de commande du bras comprennent deux unités motrices destinées à déplacer le point de commande dans des directions orthogonales pour effectuer l'extension/retrait et l'inclinaison du bras.

15. Porte-charge équilibré par contrepoids selon la revendication 14, **caractérisé en ce que** l'une des unités motrices agit dans une direction verticale sur le point de commande et l'autre unité motrice agit dans une direction horizontale du point de commande.

16. Porte-charge équilibré par contrepoids selon l'une quelconque des revendications 11 à 15, **caractérisé en ce qu'**une autre unité motrice est prévue pour faire tourner le bras autour d'un axe vertical s'étendant à travers l'axe horizontal autour duquel le bras s'incline, l'autre unité motrice étant également sous la commande desdites unités de commande.

17. Porte-charge équilibré par contrepoids selon l'une quelconque des revendications 1 à 16, **caractérisé en ce que** le support de charge utile sur le bras est conçu pour recevoir une caméra de télévision, vidéo ou cinématographique montée sur le support pour effectuer un mouvement panoramique et d'inclinaison.

18. Porte-charge équilibré par contrepoids selon la revendication 17, **caractérisé en ce que** des servomoteurs sont prévus pour déplacer la caméra par rapport au support dans des directions panoramiques et d'inclinaison par rapport au support et des moyens de commande sont prévus pour effectuer ledit mouvement panoramique et d'inclinaison de la caméra.

19. Porte-charge équilibré par contrepoids selon la revendication 17 ou la revendication 18, **caractérisé en ce que** les moyens de commande pour les servomoteurs sont placés de façon à être adjacents à l'extrémité du bras éloignée du support de charge utile.

20. Porte-charge équilibré par contrepoids selon la revendication 19, **caractérisé en ce que** les moyens de commande comprennent une commande (100) montée de façon universelle dont une rotation du bras autour d'un axe vertical provoque un mouvement panoramique de la caméra et une rotation autour de l'axe horizontal provoque un mouvement d'inclinaison de la caméra par l'intermédiaire desdits servomoteurs.

21. Porte-charge équilibré par contrepoids selon la revendication 20, **caractérisé en ce qu'**un viseur est monté sur le bras de commande et est relié à distance à la caméra pour reproduire le champ de visée de la caméra au niveau de l'élément de commande.
